# EUROPEAN PATENT APPLICATION

(11) **EP 1 842 879 A1**
(43) Date of publication of application: **10.10.2007**
(21) Application number: 06712252.3
(22) Date of filing: 24.01.2006
(51) Int. Cl.: C08L 77/06, C08K 3/04, C08K 7/06, C08K 7/14, F16C 13/00, G03G 15/02, G03G 15/16, G03G 15/08, H01B 1/24

(54) **POLYAMIDE RESIN COMPOSITION AND CONDUCTIVE SHAFT-SHAPED MOLDED ARTICLE**

(30) Priority: 26.01.2005 JP 2005018041
(71) Applicant: MITSUBISHI ENGINEERING-PLASTICS CORPORATION, Tokyo 104-0031 (JP)
(72) Inventor: KUMAZAWA, Teruhisa Mitsubishi Eng.-Plastics Corp., Hiratsuka-shi, Kanagawa 254-0016 (JP)
(74) Representative: HOFFMANN EITLE
(86) International application number: PCT/JP2006/301036
(87) International publication number: WO 2006/080303

(57) **Abstract**

The present invention relates to a polyamide resin composition comprising a polyamide resin (A), a glass fiber (B), a polyacrylonitrile (PAN)-based carbon fiber (C) and conductive carbon (D) in such a content that the component (A) is 30 to 83% by weight, a content of a sum of the components (B) and (C) (B + C) is 15 to 65% by weight, a content of the component (C) is 5 to 35% by weight, a content of the component (D) is 2 to 20% by weight and a content of a sum of the component (C) and (D) (C + D) is 7 to 55% by weight all based on a total content of the components (A) to (D), and which composition has a tensile strength of not less than 150 MPa and a tensile modulus of not less than 15 GPa; a conductive shaft-shaped molded product comprising the polyamide resin composition; and a conductive roller comprising the conductive shaft-shaped molded product, and a conductive elastic material covering the conductive shaft-shaped molded product. The polyamide resin composition exhibits excellent conductivity, heat resistance and mechanical properties which allow the composition to be used as an alternate material of metal materials employed for a shaft of rollers, etc., in printers or copying machines.

## Description

### TECHNICAL FIELD

The present invention relates to a polyamide resin composition, and more particularly to a conductive polyamide resin composition which is suitable as a material of a conductive shaft-shaped molded product having excellent strength and conductivity enough to provide an alternate material of metal shafts employed for conductive rollers, etc., in printers or copying machines.

### BACKGROUND ART

In general, polyamide resins have been extensively used as engineering plastics in various applications because of excellent mechanical properties, chemical resistance, oil resistance, gas-barrier property, etc., thereof. Also, various blended mixtures of the polyamide resins with other components have been proposed for improving inherent properties of the polyamide resins or imparting various properties thereto, whereby the application fields of the polyamide resins have been more and more expanded.

In recent years, for the purposes of realizing reduction in weight and improvement in chemical resistance, plastic materials have been increasingly employed as an alternate material of metals used in various application fields. The polyamide resins have also been expected to provide such an alternate material of metals. For example, compositions prepared by blending a reinforcing material such as glass fiber in a polyamide resin produced from xylylenediamine containing m-xylylenediamine as a main component and an α,ω-linear aliphatic dibasic acid (hereinafter referred to merely as the "polyamide MX resin") have been used as an alternate material for metals in various applications such as automobiles, railroads and house facilities because they can provide a molding material which is excellent in chemical properties, thermal properties, mechanical properties, etc.

Many of conductive rollers used in printers or copying machines, for example, transfer rollers, toner feed rollers, charging rollers, etc., which tend to come into contact with papers, usually have such a structure that the surface of a metal shaft (axis) is covered with an elastic material such as conductive rubbers or elastomers. Upon production of these conventional rollers, after the metal shaft is covered with a rubber, etc., the resultant rubber-covered shaft has been frequently subjected to processes in which heat or load is applied thereto, such as a vulcanization process and a cutting process for cutting the elastic material by a cutter. Therefore, in order to replace the metal shaft with that made of a resin material, it is required that the rein material is excellent in not only conductivity, but also in heat resistance, rigidity and mechanical properties such as tensile strength.

In Japanese Patent Application Laid-open (KOKAI) No. 62-227952, as a conductive material using the polyamide resin, there is described a composition containing a polyamide MX resin, nylon 66, glass fiber, carbon black and graphite at a specific blending ratio. However, such a composition tends to exhibit a low elongation and a low strength owing to the carbon and graphite contained therein, and further tends to be insufficient in conductivity. In Japanese Patent Application Laid-open (KOKAI) No. 62-230000, there is described a polyamide resin molding material for electromagnetic shielding which contains a polyamide MX resin, nylon 66, high-conductive glass fiber coated with metals, carbon black and graphite at a specific blending ratio. However, such a molding material tends to exhibit a low elongation and a brittleness, i.e., a low strength because carbon and graphite are also used in molding material. Further, the glass fiber coated with metals is hardly commercially available from the market at the present time.

In Japanese Patent Application Laid-open (KOKAI) No. 60-189105(1985), there is described an electromagnetic shielding material prepared by blending a thermoplastic resin with a conductive filler (such as metal fiber) and a filler as a conductivity-deterioration inhibitor (such as carbon fiber and stainless steel fiber) at a specific ratio. More specifically, as the thermoplastic resin, there is described such a material containing polystyrene as a base resin. However, the above Japanese Patent Application fails to specify a strength of the material. In Japanese Patent Application Laid-open (KOKAI) No. 59-217395, there has been proposed an electromagnetic shielding plastic material prepared by uniformly dispersing conductive carbon black and graphite fiber in a matrix plastic material at a specific ratio. More specifically, there is described such a composition using a polypropylene resin. However, the above Japanese Patent Application also fails to specify a strength of the composition.

In U.S. Patent No. 4,169,816, there is described a conductive polyolefin composition prepared by blending a reinforcing filler composed of conductive carbon, silica and carbon fiber or a mixture of carbon fiber and glass fiber, in a polyolefin resin. However, the amount of the reinforcing filler used in the composition is as small as 1 to 10 parts by weight on the basis of 100 parts by weight of the polyolefin resin. Therefore, the composition tends to be insufficient in mechanical strength.

However, in the case of these conventional injection-molding materials using polystyrene or polypropylene as a base resin, it will be difficult to obtain a composition having a good mechanical strength as aimed by the present invention.

In Japanese Patent Application Laid-open (KOKAI) No. 2001-302905, there is described a conductive resin composition prepared by blending carbon black, a carbon-based filler other than carbon black, and a rubber polymer in a polyphenylene ether/polyamide alloy at a specific ratio. However, in the above composition, since the rubber component and polyphenylene ether which are deteriorated in elastic modulus and strength as compared to those of polyamides are blended as the resin components, the resultant material tends to exhibit a low elastic modulus and a low strength as compared to those of the polyamide solely. Further, in the specified examples of the composition, the carbon fiber is blended only in an amount as low as 7% without adding any other reinforcing material thereto. Therefore, it is not expected that the obtained composition exhibits a sufficient strength.

### DISCLOSURE OF THE INVENTION

### PROBLEM TO BE SOLVED BY THE INVENTION

The present invention has been made in view of the above problems. An object of the present invention is to provide a resin material exhibiting excellent conductivity, heat resistance and mechanical strength enough to be usable as an alternate material of metal materials employed for shafts of rollers, etc., in printers or copying machines, as well as a shaft-shaped molded product produced from the resin material.

### MEANS FOR SOLVING PROBLEM

As a result of the present inventors' earnest study for solving the above problems, it has been found that a polyamide resin composition containing carbon black as a conductive component and a PAN-based carbon fiber as a fibrous reinforcing material which is further reinforced with a glass fiber, exhibits not only a strength as aimed but also an excellent conductivity. The present invention has been attained on the basis of the above finding.

Namely, to accomplish the aim, in a first aspect of the present invention, there is provided a polyamide resin composition comprising a polyamide resin (A), a glass fiber (B), a polyacrylonitrile.(PAN)-based carbon fiber (C) and conductive carbon (D) in such a content that the component (A) is 30 to 83% by weight, a content of a sum of the components (B) and (C) (B + C) is 15 to 65% by weight, a content of the component (C) is 5 to 35% by weight, a content of the component (D) is 2 to 20% by weight and a content of a sum of the component (C) and (D) (C + D) is 7 to 55% by weight all based on a total content of the components (A) to (D), and which composition has a tensile strength of not less than 150 MPa and a tensile modulus of not less than 15 GPa.

In a second aspect of the present invention, there is provided a conductive shaft-shaped molded product comprising the above polyamide resin composition.

In a third aspect of the present invention, there is provided a conductive roller comprising the above conductive shaft-shaped molded product, and a conductive elastic material coating the conductive shaft-shaped molded product.

### EFFECT OF THE INVENTION

The shaft-shaped molded product formed from the polyamide resin composition of the present invention exhibits a good conductivity, a high strength and excellent mechanical properties, and is free from breakage or damage and occurrence of significant deformation even after being subjected to a process for covering the molded product with an elastic material, and, therefore, can provide a conductive shaft or a conductive roller having a high processing accuracy.

The polyamide resin composition of the present invention is reinforced by blending both of a glass fiber and a carbon fiber in a polyamide resin as a crystalline resin and, therefore, exhibits a heat-deformation temperature near a melting point of the resin. As a result, the polyamide resin composition is free from deformation when exposed to a vulcanization temperature for rubbers and, therefore, suitable as a shaft (axis) material for rollers.

When using a shaft-shaped molded product or a roller formed from the polyamide resin composition of the present invention, a weight of a drive system can be reduced as compared to those using the existing metal shaft, resulting in saving of a power consumed.

### PREFERRED EMBODIMENTS FOR CARRYING OUT THE INVENTION

The shaft (axis) of rollers used in printers or copying machines which comes into contact with papers, etc., is covered with a soft material such as a rubber or an elastomer. When the shaft is covered with a vulcanizable rubber, the rubber-covered shaft is subjected to a vulcanization step. Therefore, it is required that the shaft is free from deformation even when exposed to a temperature as high as about 180°C. In the case where the rubber component is extrusion-coated on the shaft, it is also required to adjust a surface roughness of the rubber-coated shaft or subject the coated shaft to finishing process such as cutting of the rubber for the purpose of attaining a suitable friction coefficient thereof against papers as required in subsequent steps. For this reason, the shaft is required to have a strength and a rigidity enough to withstand a load applied during the processing steps, more specifically, have a tensile strength of not less than 150 MPa and a tensile modulus of not less than 15 GPa.

The polyamide resin (A) used in the polyamide resin composition of the present invention is a polymer containing acid amide bonds as repeating units which are obtained by ring-opening polymerization of lactams, polycondensation of aminocarboxylic acids or polycondensation of a diamine and a dibasic acid. Specific examples of the polyamide resin may include polyamides 6, 11, 12, 46, 66, 610, 612, 6I, 6/66, 6T/6I, 6/6T, 66/6T and 66/6T/6I, polyamide MX, polytrimethylhexamethyleneterephthalamide, polybis(4-aminocyclohexyl)methanedodecamide, polybis(3-methyl-4-aminocyclohexyl)methanedodecamide, polyundecamethylenehexahydroterephthalamide or the like, wherein "I" represents an isophthalic acid component, and "T" represents a terephthalic acid component.

The polyamide resin (A) used in the present invention may be selected from appropriate polyamide resins in consideration of various properties of these polyamide resins, properties of the aimed resin composition, applications or use of a molded product obtained therefrom, or the like.

Among the above polyamide resins, preferred are semi-aromatic polyamides obtained by using an aromatic ring-containing dicarboxylic component as a raw material thereof, polyamides MX obtained by using an aromatic ring-containing diamine component as a raw material thereof, and a mixture of these polyamides, since such polyamides are capable of readily forming compounds (compositions) containing a relatively large amount of a filler such as glass fiber and carbon fiber for enhancing a strength thereof.

Specific examples of the semi-aromatic polyamides include polyamides 6I, 6T/6I, 6/6T, 66/6T, 66/6T/6I, etc.

In particular, the polyamide MX resins produced by polycondensation of xylylenediamine as the aromatic ring-containing diamine component and α,ω-dibasic acid are especially preferred because they can produce a resin composition having a high strength.

Examples of the polyamide MX resins include polyamide resins obtained by polycondensing (1) 100% of meta-xylylenediamine or (2) mixed xylylenediamine composed of not less than 50 mol% of meta-xylylenediamine and not more than 50 mol% of para-xylylenediamine as the diamine component with a C₆ to C₁₂ α,ω-linear aliphatic dibasic acid or an aromatic dibasic acid. Among these polyamide MX resins, especially preferred are those produced by using adipic acid as the dicarboxylic acid component.

Further, a mixture of the aromatic ring-containing polyamide resin and an aliphatic polyamide resin is also preferably used. When the aliphatic polyamide resin solely is blended with a large amount of fillers, the resultant composition tends to be insufficient in appearance and properties. However, the composition prepared by mixing the aliphatic polyamide resin with the above aromatic ring-containing polyamide resin can be improved in appearance and properties.

In addition, not more than 70% of the polyamide MX resin may be substituted with an aliphatic or semi-aromatic polyamide resin (i.e., the polyamide MX resin may be in the form of a polyamide resin composition containing the polyamide MX resin in an amount of not less than 30% by weight). For example, when not more than 70% by weight of the polyamide MX resin is substituted with polyamides having a high crystallization velocity such as polyamide 66, polyamide 46 and polyamide 9T, or polyamides having a high melting point such as polyamides 66/6T and 66/6T/6I, a molding cycle time of the resultant mixture can be shortened. As the polyamide to be substituted for the polyamide MX, especially preferred is polyamide 66. Meanwhile, when more than 70% of the polyamide MX is substituted with the other polyamides, the resultant polyamide resin composition tends to be deteriorated in strength and rigidity which are properties inherent to the polyamide MX resin.

The glass fiber (B) used in the polyamide resin composition of the present invention may be in the form of chopped strands which are usually used as a reinforcing material for resins. The glass fiber is preferably subjected to surface treatment or binding treatment with a sizing agent (binder) optimized depending upon the polyamide resin (A) used, etc. The fiber diameter of the glass fiber is not particularly limited, and is usually 6 to 13 µm, since such a glass fiber is ordinarily distributed in the market and, therefore, readily available. In general, the glass fiber having a smaller diameter tends to exhibits a higher strength.

As the sizing agent or surface-treating agent for the glass fiber, there may be generally used silane-based treating agents. Also, in order to enhance a LLC (cooling water) resistance of the glass fiber, a sizing agent containing a maleic anhydride copolymer is preferably used.

The PAN-based carbon fiber (C) used in the polyamide resin composition of the present invention is such a carbon fiber obtained by carbonizing polyacrylonitrile. The carbon fiber is expected to have two effects, i.e., the effect of maintaining a good strength of the resin composition and the effect of imparting a good conductivity thereto. As is apparent from the below-mentioned Examples, a pitch-based carbon fiber is not only insufficient in strength but also deteriorated in conductivity as compared to the PAN-based carbon fiber. It is suggested that the pitch-based carbon fiber is inherently superior in conductivity to the PAN-based carbon fiber because of a high graphitization percentage thereof. However, in the composition of the present invention, since the pitch-based carbon fiber is used in combination with the glass fiber, it is considered that the carbon fiber suffers from breakage of fibers, resulting in deteriorated conductivity.

The fiber diameter of the PAN-based carbon fiber (C) is not particularly limited, and is preferably 5 to 20 µm and more preferably 5 to 13 µm. The aspect ratio of the PAN-based carbon fiber (C) is preferably not less than 10. The PAN-based carbon fiber (C) is preferably treated with an epoxy resin or a polyamide resin as a sizing agent which may be used in an amount of 1 to 5% by weight on the basis of the weight of the carbon fiber.

The conductive carbon (D) used in the polyamide resin composition of the present invention may be carbon black in the form of fine black particles usually produced by subjecting natural gas or liquid hydrocarbon to incomplete combustion. Examples of the conductive carbon (D) used in the present invention include acetylene black obtained by subjecting acetylene gas to complete combustion, and koechen black obtained by subjecting a raw crude oil to furnace-type incomplete combustion, though not particularly limited thereto. The DBP (dibutyl phthalate) oil absorption of the carbon black is usually not less than 70 mL/100 mg, preferably not less than 100 mL/100 mg and more preferably not less than 150 mL/100 mg. Meanwhile, the DBP oil absorption is the value measured by the method prescribed in ASTM D2414.

The polyamide resin composition of the present invention contains the above components (A), (B), (C) and (D) at a specific blending ratio. More specifically, the content of a sum of the components (B) and (C) (B + C) in the composition is 15 to 65% by weight on the basis of the total weight (as 100% by weight) of the components (A) to (D). The components (B) and (C) both are fibrous reinforcing materials which serve for enhancing a strength of the composition. When the content of a sum of the components (B) and (C) is less than 15% by weight, the resultant composition tends to hardly exhibit sufficient strength and rigidity as aimed by the present invention. When the content of a sum of the components (B) and (C) is more than 65% by weight, the resultant composition tends to be deteriorated in productivity of compounds and fluidity upon injection-molding, resulting in poor moldability.

Also, in order to suppress the costs, among the components (B) and (C), it is preferable to reduce the amount of the carbon fiber (C) used. However, when the amount of the carbon fiber (C) used is too small, the rate (probability) of contact between fibers and the dispersibility of the conductive carbon therein tend to be deteriorated, resulting in poor conductivity of the resultant composition. On the other hand, when the carbon fiber having a low specific gravity is used in a large amount, the productivity of compounds and the fluidity upon injection-molding tend to be deteriorated owing to a large volume fraction thereof, resulting in poor moldability of the resultant composition. Therefore, the content of the PAN-based carbon fiber (C) in the composition is 5 to 35% by weight and preferably 7 to 35% by weight on the basis of the total content (as 100% by weight) of the components (A) to (D).

When the content of the conductive carbon (D) in the polyamide resin composition of the present invention is too small, the conductivity of the composition depends upon only the carbon fiber (C), so that the obtained composition may fail to exhibit a uniform conductivity. When the content of the conductive carbon (D) in the composition is too large, the resultant resin composition tends to be deteriorated in elongation. Therefore, the content of the conductive carbon (D) in the composition is 2 to 20% by weight and preferably 3 to 10% by weight on the basis of the total weight (as 100% by weight) of the components (A) to (D).

In addition, the content of a sum of the carbon fiber (C) and the conductive carbon (D) (C + D) in the composition is 7 to 55% by weight, preferably 10 to 30% by weight and more preferably 15 to 30% by weight on the basis of the total weight (as 100% by weight) of the components (A) to (D).

Further, the content of the polyamide resin (A) in the polyamide resin composition is 30 to 83% by weight and preferably 35 to 70% by weight. When the content of the polyamide resin (A) in the composition is less than 30% by weight, it may difficult to obtain the aimed compounded product. When the content of the polyamide resin (A) in the composition is more than 83% by weight, the amount of the conductive material contained in the composition tends to be comparatively reduced, and the reinforcing effect tends to be lowered, so that it may be difficult to obtain the polyamide resin composition as aimed by the present invention.

Thus, the conductive polyamide resin composition of the present invention contains the above components (A) to (D) as essential components. Further, the polyamide resin composition of the present invention may also contain, if required, various optional additives for resins unless the addition thereof adversely affects the aimed objects and effects of the present invention. Examples of the additives include antioxidants, metal deactivators, flame retardants (such as organophosphoric ester-based compounds, inorganic phosphorus-based compounds, aromatic halogen-based flame retardants and silicone-based flame retardants), flame-retarding assistants such as fluorine-based polymers and antimony trioxide, pigments, dyes, mold release agents, lubricants, foaming agents, nucleating agents, weather-resisting modifiers, etc.

The method of producing the conductive polyamide resin composition of the present invention is not particularly limited. The polyamide resin composition of the present invention may be produced by mixing the above components (A) to (D), if required, together with various additives. As the mixing method, there may be used known methods. For example, desired amounts of the necessary components are weighed, and mixed with each other using a ribbon blender, a Henschel mixer, a drum tumbler, etc. Then, the resultant mixture is melt-kneaded by a single-screw or twin-screw extruder, a cokneader, a Banbury mixer or the like, and formed into a pellet-like resin composition. The mixing of the respective components may be conducted at the same time or sequentially. Also, a part of the components such as the glass fiber may be side-fed upon melt-kneading.

In addition, some of the components which are previously mixed at a separate step may be mixed with the other components, melted and then pelletized. In particular, carbon which tends to contaminate the working environment is preferably used in the form of a master batch produced at a separate step.

The polyamide resin composition of the present invention may be formed into an optional shape by various molding methods ordinarily used for shaping thermoplastic resins. Examples of the molding methods include an injection-molding method, an extrusion-molding method, a blow-molding method, a compression-molding method and a transfer-molding method.

The polyamide resin composition of the present invention can exhibit an excellent conductivity, a high mechanical strength and a high rigidity, and has a tensile strength of not less than 150 MPa and a tensile modulus of not less than 15 GPa. Further, when the polyamide MX resin or the semi-aromatic polyamide is used in the composition and the kinds and amounts of the other components used therein are controlled within the range as defined by the present invention, it is also possible to obtain polyamide resin compositions having a tensile strength of not less than 180 MPa and a tensile modulus of not less than 17 GPa, and further those compositions having a tensile strength of not less than 230 MPa and a tensile modulus of not less than 18 GPa. Therefore, the polyamide resin composition of the present invention is suitably used as a raw molding material for shaft-shaped molded products such as shafts for conductive rollers which require such a high strength.

The shaft-shaped molded product of the present invention may be of either a solid shape or a hollow shape according to the aimed applications. Further, the diameter, length, resistance value, etc., of the shaft-shaped molded product may also be appropriately selected according to the aimed applications. The method for producing the shaft-shaped molded product is not particularly limited. The shaft-shaped molded product is preferably produced by an injection-molding method. The shaft-shaped molded product produced by the injection-molding method can be subjected to both end simultaneous polishing process to enhance a dimensional accuracy at both ends of the shaft-shaped molded product.

The conductive roller of the present invention may be obtained by covering (coating) the conductive shaft-shaped molded product as a core with an elastic material such as conductive rubbers. The elastic material used for provided on the shaft-shaped molded product is not particularly limited. Examples of the elastic material include urethane rubbers, silicone rubbers, polybutadiene-based rubbers and natural rubbers. These elastic materials may be used alone or in the form of a mixture of any two or more thereof. In order to impart a good conductivity to the elastic material, there may be used the method of blending or mixing a conductive agent such as conductive carbon in the elastic material, the method of applying a conductive coating material onto the surface of the roller covered with the elastic material, or the like.

As the method of covering the conductive shaft-shaped molded product with the conductive elastic material, there may be used various known methods. For example, there may be used the method of previously placing the conductive shaft-shaped molded product within a metal mold and then injecting an elastic material such as an urethane molding material into the mold, followed by solidifying the elastic material, the method of pressure-fitting the shaft into a tube molded from the elastic material, the method of bonding a sheet made of the elastic material onto an outer surface of the conductive shaft-shaped molded product through a suitable adhesive, or the like. If required, the elastic (rubber) material before or after covering the shaft-shaped molded product may be subjected to vulcarnization treatment.

The conductive elastic material layer formed around the shaft-shaped molded product by the above method, tends to have scores corresponding to parting lines of the mold, or tends to suffer from deviation of its sectional shape from a circularity and deviation of an axis center at both ends of the shaft owing to various factors such as deformation upon releasing from the mold and offset of an original cavity shape of the mold. If such a defective product is directly used as a roller for printers or copying machines, there tend to be caused spot-like stains upon printing. In this case, as described above, there may be conducted such a post-treatment in which the surface of the elastic material applied on the shaft which is enhanced in accuracy of its axis center by the both end simultaneous polishing is cut by using the both ends of the shaft as a fulcrum to realize a necessary circularity thereof.

Examples of the application fields in which the conductive shaft-shaped molded product or the conductive roller produced by covering the molded product with an elastic material according to the present invention are suitably used, include printers and copying machines. The conductivity required in these application fields is not as high as that required for EMI shielding, namely, since the resistance value required for charging and discharging in these application fields is from about several hundred Ω to about several MΩ, it is unnecessary that the molded product or roller exhibits a too high conductivity. On the other hand, when using an unstable conductive material which is conductive to a tunnel current at a high voltage but becomes non-conductive in the absence of the tunnel current at a low voltage, it is not possible to exhibit a stable electric performance. That is, the conductive shaft-shaped molded product and the conductive roller according to the present invention can be suitably used in the applications in which a stable conductivity is expected irrespective of contact points thereof in the resistance range of about several hundred Ω to about several MΩ, and a high strength and a high modulus are required.

### EXAMPLES

The present invention is described in more detail by the following Examples. However, these Examples are only illustrative and not intended to limit a scope of the present invention.

The materials used in the following Examples and Comparative Examples are as follows.
* Polyamide MX resin: "RENY (registered trademark) 6002" produced by Mitsubishi Engineering-Plastics Corporation.
* Polyamide 6: "NOVAMIDE (registered trademark) 1013J" (relative viscosity: 2.5 as measured in 98% concentrated sulfuric acid) produced by Mitsubishi Engineering-Plastics Corporation.
* Polyamide 6T/6I: "NOVAMIDE (registered trademark) X21" produced by Mitsubishi Engineering-Plastics Corporation.
* Glass fiber: "CS03JAFT-2" (chopped strands of glass fiber having a diameter of 10 µm) produced by Asahi Fiber Glass Co., Ltd.
* PAN-based carbon fiber: "PYROFIL TR03NB" (fiber diameter: 7 µm) produced by Mitsubishi Rayon Co., Ltd.
* Pitch-based carbon fiber: "DIALEAD K223HQ" produced by Mitsubishi Chemical Corporation.
* Conductive carbon: "VULCAN XC-72" (furnace black; DBP oil absorption: 200 mL/100 g) produced by Cabot Corp.
* Graphite: "TOKU CP" (natural scale-shaped graphite) produced by Nippon Graphite Industries, Ltd.
* Nucleating agent: "MICRON WHITE 5000A" (talc) produced by Hayashi-Kasei Co., Ltd.
* Mold release agent: "LICOWAX E" (montanic ester) produced by Clariant in Japan Co., Ltd.
   Meanwhile, the nucleating agent and the mold release agent were used in amounts of about 1% by weight and about 0.1% by weight, respectively, on the basis of the weight of the resin composition.
   The thus obtained resin composition was evaluated by the following testing methods
* Tensile strength and tensile modulus:
   Measured according to ISO 527-1 and ISO 527-2.
* Volume resistivity:
   Measured according to ASTM D257 using an ultra-insulation resistance meter "R8340" manufactured by Advantest Corporation, by setting a voltage to 5V.
* Pinpoint resistance:
   The respective compositions obtained in Examples and Comparative Examples were molded into a disk having a diameter of 4 inches and a thickness of 1/8 inch. The thus obtained disk was placed on a flat metal plate to measure a resistance value between the metal plate and the disk by using a tester. As a terminal, there was used a metal bar with a rounded tip end having a diameter of about 1.5 mm. The tester was used to measure a resistance value at which a voltage of 3 V was generated.

### Examples 1 to 4 and Comparative Examples 1 to 6:

The respective components were weighed in amounts as shown in Tables 1 and 2, and the components except for the glass fiber and the carbon fiber were mixed together by a tumbler for about 10 min. Then, the glass fiber and the carbon fiber were charged into the tumbler, and the contents of the tumbler were mixed with each other for about 1 min. The obtained mixture was charged into a hopper of a 65 mmφ single-screw extruder ("VC65" manufactured by Tanabe Plastic Co., Ltd.), and kneaded and melted therein at a cylinder temperature of 280°C, and then extruded therefrom to obtain pellets. The thus obtained pellets were fully dried and then fed into an injection-molding machine ("Model SH100"; capacity; 100 tons; cylinder diameter: 36 mm) manufactured by Sumitomo Heavy Industry, Ltd., and molded under the following molding conditions A or B to produce a test specimen for evaluation. The evaluation results are shown in Tables 1 and 2.

Molding condition A: The cylinder temperature was equally set to 270°C, and the mold temperature was set to 130°C.

Molding condition B: The cylinder temperature was equally set to 260°C, and the mold temperature was set to 100°C.

Other conditions were determined according to the ISO standards.

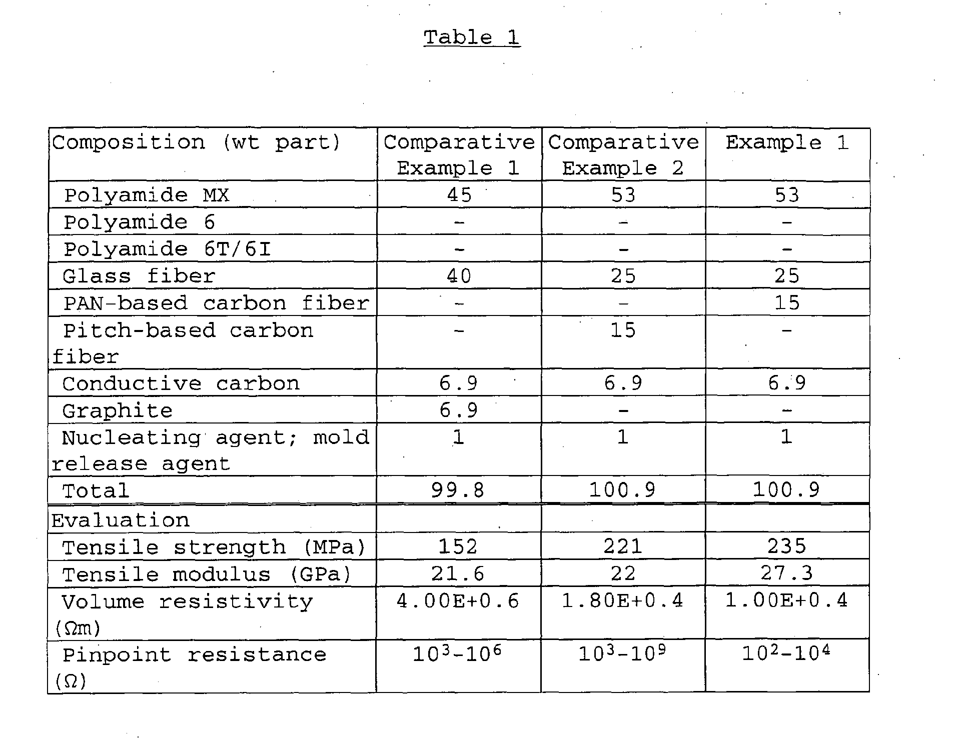

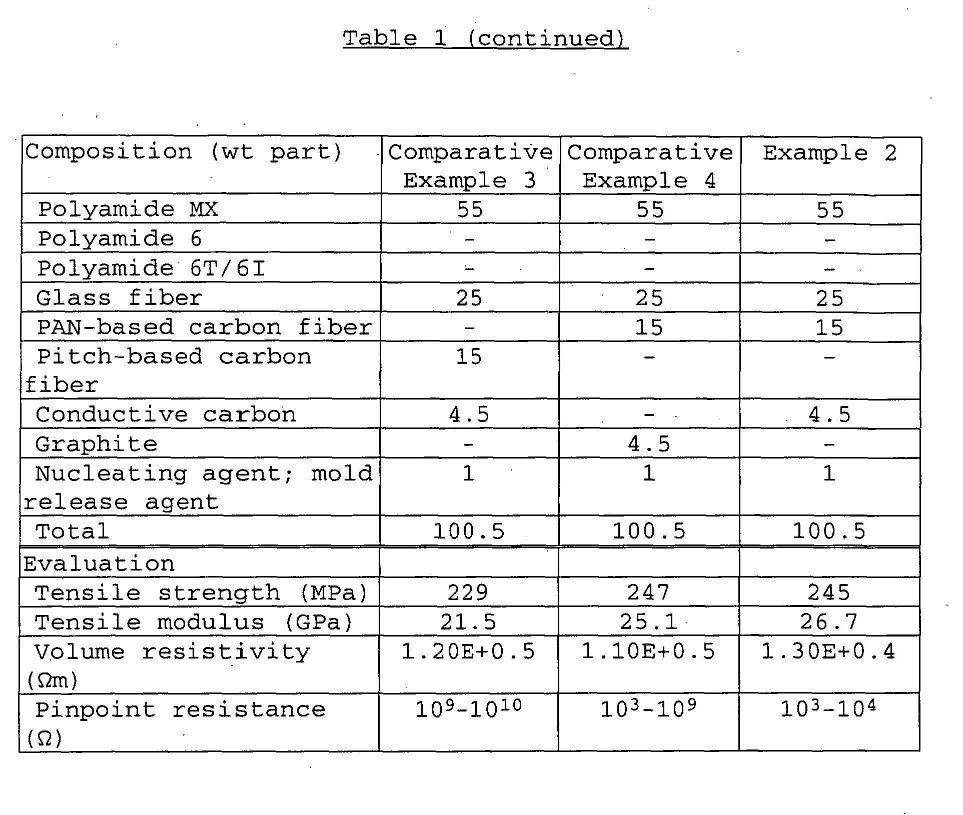

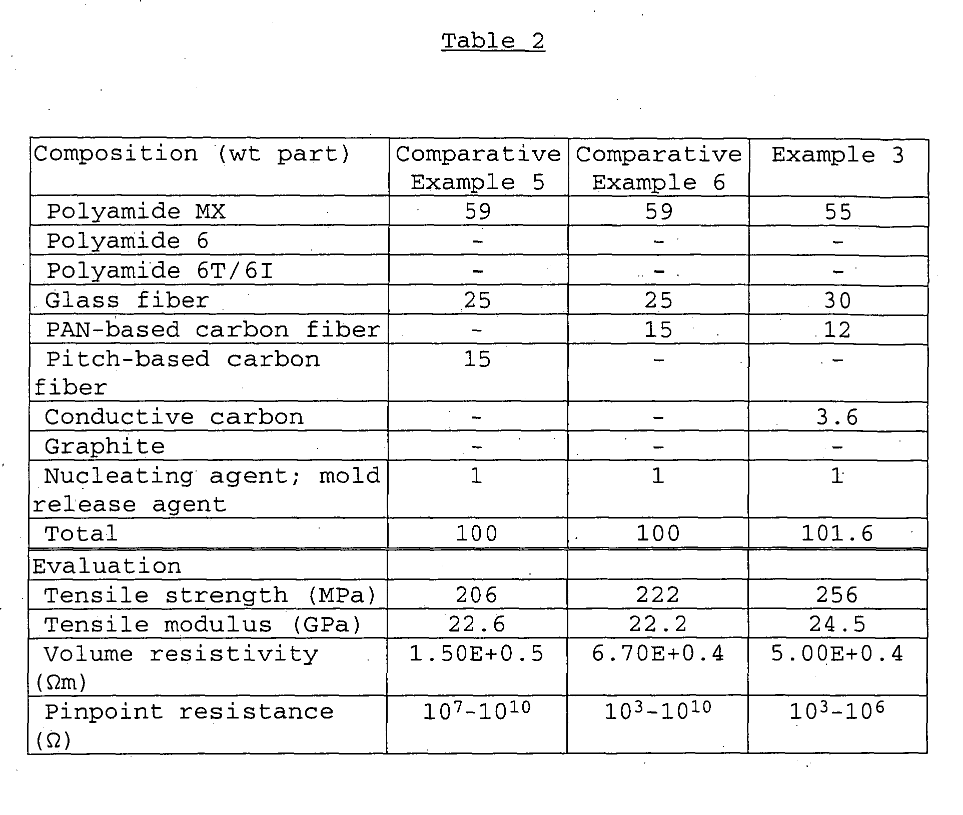

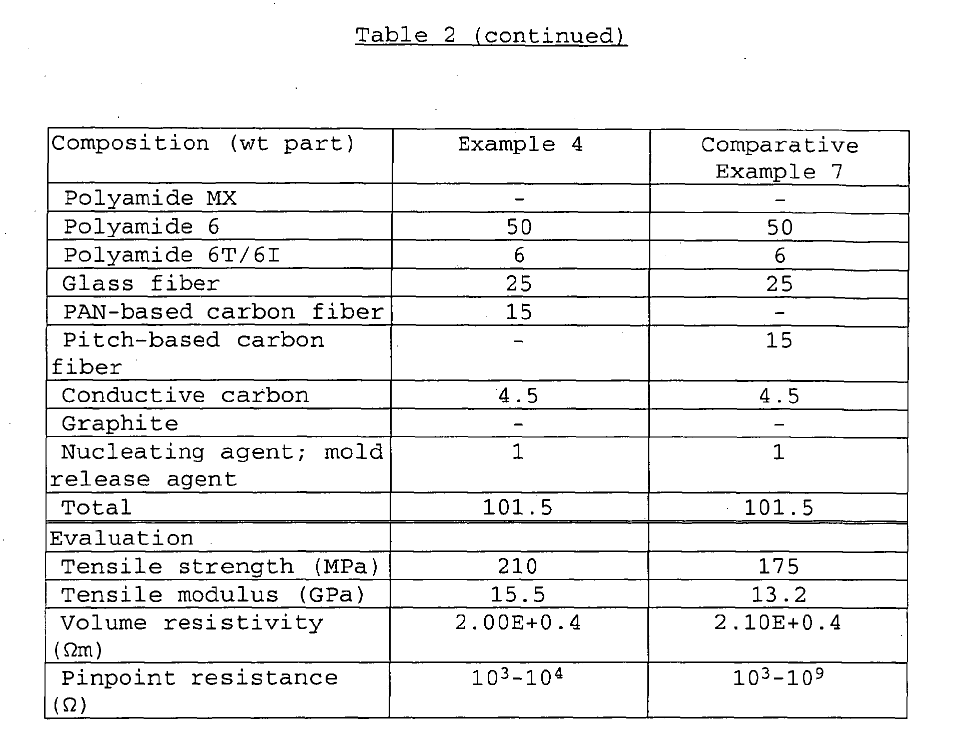

### INDUSTRIAL APPLICABILITY

The conductive resin composition of the present invention is preferably applicable to production of shaft-shaped molded products, in particular, molded products such as conductive shafts used in printers and copying machines. The molded products obtained from the resin composition of the present invention can be suitably used in the applications in which a stable conductivity is expected irrespective of contact points thereof in the resistance range of from about several Ω to about several MΩ, and a high strength and a relatively high elastic modulus are required.

Although the present invention is described above with respect to embodiments which are considered to be most practical and preferable at the present time, the present invention is not limited to these embodiments, and various changes and modifications will be appropriately made within the scope of claims and a whole content of a specification of this application unless departing from the subject matter and concept of the present invention, and it should be construed that these changes and modifications are involved in technical scope of the present invention. Meanwhile, the present patent application is based on Japanese Patent Application No. 2005-18041 filed on January 26, 2005, whole contents of which are incorporated herein by reference.

## Claims

1. A polyamide resin composition comprising a polyamide resin (A), a glass fiber (B), a polyacrylonitrile (PAN)-based carbon fiber (C) and conductive carbon (D) in such content that the component (A) is 30 to 83% by weight, a content of a sum of the components (B) and (C) (B + C) is 15 to 65% by weight, a content of the component (C) is 5. to 35% by weight, a content of the component (D) is 2 to 20% by weight and a content of a sum of the component (C) and (D) (C + D) is 7 to 55% by weight all based on a total content of the components (A) to (D), which composition has a tensile strength of not less than 150 MPa and a tensile modulus of not less than 15 GPa.

2. A polyamide resin composition according to claim 1, wherein the composition has a tensile strength of not less than 180 MPa and a tensile modulus of not less than 17 GPa.

3. A polyamide resin composition according to claim 1, wherein at least a part of the polyamide resin (A) is constituted of an aromatic ring-containing polyamide resin.

4. A polyamide resin composition according to claim 1, wherein the polyamide resin (A) contains a polyamide MX resin produced from xylylenediamine and an α,ω-linear aliphatic dibasic acid, in an amount of not less than 60% by weight.

5. A polyamide resin composition according to claim 1, wherein the composition has a tensile strength of not less than 230 MPa and a tensile modulus of not less than 18 GPa.

6. A conductive shaft-shaped molded product comprising the polyamide resin composition as defined in any one of claims 1 to 5.

7. A conductive roller comprising the conductive shaft-shaped molded product as defined in claim 6, and a conductive elastic material covering the conductive shaft-shaped molded product.
